# EUROPÄISCHE PATENTANMELDUNG

(11) **EP 1 964 814 A1**
(43) Veröffentlichungstag der Anmeldung: **03.09.2008**
(21) Anmeldenummer: 07004096.9
(22) Anmeldetag: 28.02.2007
(51) Int. Cl.: C02F 3/20, B01F 3/04

(54) **Belüftungseinrichtung für Klärbecken**

(71) Anmelder: NORRES Schlauchtechnik GmbH & Co. KG, 45881 Gelsenkirchen (DE)
(72) Erfinder: Engelmeyer, Jörg, 46562 Voerde (DE); Mollen, Burkhard, 45134 Essen (DE)
(74) Vertreter: Rohmann, Michael

(57) **Zusammenfassung**

Beltiftungseinrichtung zur Belüftung von Klärbecken aus thermoplastischem Polyurethan, wobei das Polyurethan aus polymeren Ethereinheiten und/oder polymeren Estereinheiten aufgebaut ist, die durch Urethangruppen miteinander verbunden sind. Die Beluftungseinrichtung weist eine zumindest über einen Teil ihrer Länge verlaufende und zumindest über einen Teil ihres Umfangs verlaufende Perforation auf.

## Beschreibung

Die Erfindung betrifft eine Belüftungseinrichtung, insbesondere eine Belüftungseinrichtung zur Belüftung von Klärbecken, Fischteichen, MBR-Anlagen und SBR-Anlagen.

Belüftungselemente, mit denen Klärbecken belüftet werden können, sind aus der Praxis grundsätzlich bekannt. Diese aus dem Stand der Technik bekannten Belüftungselemente bzw. Belüftungsschläuche bestehen dabei aus Keramiken, porösen Plastiken oder perforierten Membranen und weisen Poren auf, durch die Druckluft zur Belüftung der Klärbecken gepresst wird.

Die Herstellung von keramischen Belüftungselementen erfolgt aus Aluminiumoxiden und Silikaten bei über 1.000 °C. Bedingt durch das Herstellungsverfahren schwankt die Porengröße zwischen 40 und 140 µm. Als nachteilig hat sich neben dem äußerst aufwendigen und energieintensiven Herstellungsprozess vor allem die im Betrieb früh auftretende Verstopfung der Poren der keramischen Belüftungselemente erwiesen. Dies ist besonders bei intermittierendem Betrieb zu beobachten. Darüber hinaus laufen die keramischen Belüfter im drucklosen Zustand voll Abwasser. Bei erneut anliegendem Druck lässt sich das Abwasser (Klärschlamm) nur schwer aus dem Belüfter drücken und verstopft die Poren von innen. Ähnliche Probleme treten beim Ersatz der keramischen Belüftungselemente durch poröse Plastiken auf, die sich im Betrieb nicht bewähren konnten.

Eine Verbesserung der Belüftungselemente kann durch den Einsatz neuer Materialien erzielt werden, wie z.B. PVC oder EPDM. Auf PVC basierenden Belüftungselementen werden Weichmacher zugesetzt, so dass ein flexibles Material zur Verfügung steht. Auf Grund der Probleme, die die Entsorgung von PVC bereitet, werden in der letzten Zeit hauptsächlich Belüftungselemente aus EPDM-, Silikon- und vereinzelt auch PU-Membranen eingesetzt.

Belüftungselemente aus EPDM haben den Nachteil, dass sie von vielen organischen Lösungsmitteln gelöst werden, was zu einer deutlich verkürzten Einsatzdauer in Industriekläranlagen führt. In Abhängigkeit vorn Salzgehalt der zu klärenden Abwässer neigen EPDM-Belüftungselemente zum Verspröden, wodurch die Haltbarkeit ebenfalls deutlich reduziert wird. Durch die einsetzende Versprödung, die durch das Ausschwemmen der Weichmacher hervorgerufen wird, ist ein Druckanstieg im Belüftungssystem unvermeidbar. Darüber hinaus bildet sich auf Belüftungselementen aus EPDM regelmäßig relativ schnell ein Überzug aus biologischem Bewuchs, der ebenfalls einen nachteilhaften Druckanstieg in dem Belüftungselement verursacht. Als Folge eines Druckanstiegs fallen für den Anlagenbetreiber deutlich höhere Betriebskosten an und im extremsten Fall ist der Ausfall der Druckluftaggregate auf Grund von Überhitzung möglich.

Sowohl Schläuche aus EPDM als auch Schläuche aus Silikon zeichnen sich durch den Nachteil aus, dass im Laufe des Betriebs die Poren aufreißen, wodurch die Größe der aus den Poren austretenden Luftblasen zunimmt. Das führt zu einem verminderten Sauerstoffeintrag in das Klärbecken.

Die bisher eingesetzten Belüftungselemente auf Basis von Polyurethan (PU) sind den thermischen Anforderungen nicht gewachsen. Wegen der Erweichung von Polyurethanen beim Erwärmen sind aufwendige Regeltechniken erforderlich, um einen konstanten Sauerstoffeintrag bei sich auf Grund von Temperaturschwankungen ändernden Porengrößen in das Klärbecken zu gewährleisten. Des Weiteren tritt eine frühe Schädigung einer PU-Membran durch aggressive Abwässer insbesondere in industriellen Kläranlagen auf. Ferner entspricht das Abperlverhalten der durch die Poren eines bekannten PU-Belüftungsschlauches gepressten Luft nicht den Anforderungen, da sich die Luftblasen auf der Schlauchoberfläche zu größeren Luftblasen zusammenlagern und einen effizienten Sauerstoffeintrag in das Klärbecken verhindern.

Der Erfindung liegt das technische Problem zu Grunde, eine Belüftungseinrichtung für ein Klärbecken anzugeben, die kostengünstig herstellbar ist, die insbesondere den thermischen Anforderungen stand hält und bei der die vorstehend aufgeführten Nachteile effektiv vermieden werden können,

Zur Lösung des technischen Problems lehrt die Erfindung eine Belüftungseinrichtung zur Belüftung von Klärbecken und dergleichen, deren Wandung zumindest bereichsweise aus Polyurethan besteht,
wobei das Polyurethan polymere Ethereinheiten und/oder polymere Estereinheiten aufweist, die durch Urethangruppen miteinander verbunden sind
und wobei die Wandung zumindest bereichsweise eine Perforation in Form von Luftaustrittsöffnungen aufweist.

Nach einer bevorzugten Ausführungsform der Erfindung ist die Belüftungseinrichtung bzw. die Belüftungsmembran als Schlauch ausgebildet und die Perforation in Form der Luftaustrittsöffnungen erstreckt sich über zumindest einen Teil der Länge des Schlauches und über zumindest einen Teil des Umfangs des Schlauches.

Es liegt im Rahmen der Erfindung, dass die Belüftungseinrichtung aus einem thermoplastischen Polyurethan besteht, das ein Blockcopolymer ist und bevorzugt aus Hart- und Weichsegmenten, die sehr bevorzugt aus extrem langen Ketten bestehen, aufgebaut ist. Dieses Blockcopolymer besteht aus unterschiedlichen Polyurethanausgangsstoffen, die sich aus urethanverbrückten, polymeren Ethereinheiten und/oder polymeren Estereinheiten zusammensetzen. Polyurethanausgangsstoffe meint im Rahmen der Erfindung insbesondere fertige Polyurethane, die durch Polyaddition aus zwei- oder höherwertigen Alkoholen und Isocyanaten entstanden sind. Polyurethanausgangsstoff meint weiterhin vorzugsweise ein nicht oder nur wenig vernetztes Polyurethan. Es liegt im Rahmen der Erfindung, dass maximal 30 Gew.-% des Poiyurethanausgangsstoffes vernetzt sind, vorzugsweise weniger als 25 Gew.-%, bevorzugt weniger als 20 Gew.-% und sehr bevorzugt weniger als 10 Gew.-% des Polyurethanausgangsstoffes.

Nach einer bevorzugten Ausführungsform der Erfindung sind die Luftaustrittsöffnungen der Belüftungseinrichtung schlitzförmig und/oder kreisförmig und/oder 1-förmig ausgebildet. Es liegt im Rahmen der Erfindung, dass eine Öffnung der Luftaustrittsöffnungen durch eine innenseitige Druckbeaufschtagung der Belüftungseinrichtung erfolgt. Ist die Belüftungseinrichtung innenseitig druckfrei und/oder ist der von außen auf die Belüftungseinrichtung ausgeübte Druck mindestens so groß wie der innenseitige Druck, so sind die Luftaustrittsöffnungen zweckmäßigerweise verschlossen. Da durch die verschlossenen Poren kein Medium in die Belüftungseinrichtung eindringen kann, sind diese Lüfter besonders für den intermittierenden Betrieb geeignet. Die Weiterreißfestigkeit der Belüftungseinrichtung gegen das Weiter- bzw. Aufreißen der Luftaustrittsöffnungen beträgt nach DIN 53515 bevorzugt 40 bis 70 N/mm, sehr bevorzugt 45 bis 65 N/mm und besonders bevorzugt 50 bis 60 N/mm. Damit ist die Weiterreißfestigkeit der erfindungsgemäßen Belüftungseinrichtung wesentlich höher als die von Silikonmembranen.

Vorzugsweise wird die Belüftungseinrichtung aus dem modifizierten Polyurethan durch Extrusion hergestellt. Zweckmäßigerweise wird das unter Erwärmen in einem Extruder gebildete Polyurethan von einer Förderschnecke unter Druck durch eine Extrusionsdüse gepresst. Es liegt im Rahmen der Erfindung, dass die extrudierte Belüftungseinrichtung als zylinderförmiger Schlauchbelüfter oder als im Wesentlichen zylinderförmiger Schlauchbelüfter ausgebildet ist. In anderen Ausführungsformen ist die Belüftungseinrichtung als Tellerbelüfter oder Flächenbelüfter ausgestaltet.

Zweckmäßigerweise wird der Belüftungseinrichtung bei der bevorzugt durchgeführten Extrusion Diphenylmethan-4,4'-diisocyanat und/oder Toluylen-diisocyanat als Diisocyanatkomponente zugesetzt. Es liegt im Rahmen der Erfindung, dass in die Granulateinzugszone des Extruders neben dem dem erfindungsgemäßen Polyurethan zu Grunde liegenden Polyether und/oder Polyester Diisocyanate dosiert werden. Zweckmäßigerweise bildet sich dann durch Erwärmen im Extruder das erfindungsgemäße Polyurethan, dessen Ethereinheiten und/oder Estereinheiten durch das zugegebene Diisocyanat miteinander verbunden werden. Vorzugsweise wird Diphenylmethan-4,4'-diisocyanat und/oder Toluylendiisocyanat mit den polymeren Ethereinheiten und/oder Estereinheiten im Extruder vermischt. Bevorzugt wird das Diisocyanat mit Additiven versehen und zweckmäßigerweise in flüssiger Form in den Extruder dosiert. - Es liegt im Rahmen der Erfindung, dass das thermoplastische Polyurethan 0,2 bis 10 Gew.-%, bevorzugt 0,4 bis 8 Gew.-% und besonders bevorzugt 0,5 bis 6 Gew.-% zumindest einer Diisocyanatkomponente enthält.

Vorzugsweise wird zumindest ein Teil der Belüftungseinrichtung mit einem Gleitmittel behandelt. Zur Verbesserung des Abperlverhaltens wird die Belüftungseinrichtung dabei zweckmäßigerweise mit zumindest einem Gleitmittel behandelt, das die Haftung der durch die Luftaustrittsöffnungen strömenden Luftblasen auf der Außenseite der Belüftungseinrichtung herabsetzt und so das Aggregieren der kleinen Luftblasen zu größeren verhindert. Es liegt im Rahmen der Erfindung, dass das Gleitmittel in dem Mantel der Belüftungseinrichtung enthalten ist. In einer bevorzugten Ausführungsform wird das Gleitmittel dem Belüftungseinrichtungsmaterial im Extruder zugesetzt. In einer anderen, bevorzugten Ausführungsform wird das Belüftungseinrichtungsmaterial vor dem Extruder mit dem Gleitmittel vermischt, wobei zur gleichmäßigen Verteilung des Gleitmittels auf dem granulatförmigen Belüftungseinrichtungsmaterial ein Öl zugemischt ist. In einer besonders bevorzugten Ausführungsform wird Polytetrafluorethylen (PTFE) und/oder Siloxan-Copolymer als Gleitmittel dem Belüftungseinrichtungsmaterial zugegeben. Vorzugsweise ist das Gleitmittel zu 0,05 bis 10 Gew.-%, bevorzugt zu 0,1 bis 5 Gew.-%, sehr bevorzugt zu 0,1 bis 3 Gew.-% und besonders bevorzugt zu 0,1 bis 0,4 Gew.-% in dem Mantel der Belüftungseinrichtung enthalten. In einer weiteren Ausführungsform kann die äußere Oberfläche der Belüftungseinrichtung zumindest teilweise mit dem Gleitmittel beschichtet sein. Es liegt auch im Rahmen der Erfindung, dass die Belüftungseinrichtung das Gleitmittel sowohl in ihrem Mantel verteilt enthält als auch an ihrer äußeren Oberfläche mit dem Gleitmittel beschichtet ist.

Gemäß einer besonders bevorzugten Ausführungsform ist die aus thermoplastischem Polyurethan bestehende Belüftungseinrichtung mit zumindest einem Biozid behandelt. Dem thermoplastischen Material der Belüftungseinrichtung ist dabei zweckmäßigerweise ein Biozid zugemischt, das vorzugsweise in wässrigen Lösungsmitteln schwer löslich ist. Dadurch wird ein störender Bewuchs des Schlauches mit Algen oder anderen Mikroben effektiv vermieden. Eine empfohlene Ausführungsform der Erfindung ist dadurch gekennzeichnet, dass die Belüftungseinrichtung 0,02 bis 7 Gew.-%, bevorzugt 0,05 bis 5 Gew.% und sehr bevorzugt 0,1 bis 4 Gew.-% eines Biozids enthält. Vorzugsweise ist das Biozid in das Material des Mantels der Belüftungseinrichtung eingemischt, bevorzugt wird das Biozid einem für die Herstellung der erfindungsgemäßen Belüftungseinrichtung erforderlichen Weichmacher zugegeben. Nach einer Ausführungsform kann das Biozid auf zumindest einen Teil der äußeren Oberfläche der Belüftungseinrichtung aufgetragen sein. In einer weiteren Ausführungsform ist das Biozid sowohl in das Material der Belüttungseinrichtung eingearbeitet als auch auf zumindest einen Teil der äußeren Oberfläche der Belüftungseinrichtung aufgetragen. Auftrag auf die äußere Oberfläche des Belüftungseinrichtung meint insbesondere eine biozidhaltige Beschichtung der äußeren Oberfläche.

Es liegt im Rahmen der Erfindung, dass als Biozid zumindest eine Verbindung aus der Gruppe der Fungizide eingesetzt wird. In einer sehr bevorzugten Ausführungsform basiert das zumindest eine Fungizid auf Arsen und/oder Silber. Besonders bevorzugt wird 10, 10'-Oxybisphenoxyarsin (PBPA) und/oder Silberionen enthaltende auf Zirkonphosphat basierende Keramik, die zweckmäßigerweise als Granulat vorliegt, dem Material der Belüftungseinrichtung hinzugefügt, Der Anteil der bevorzugt in das Material der Belüftungseinrichtung eingearbeiteten oder auf den Mantel der Belüftungseinrichtung aufgebrachten auf Arsen und/oder Silber basierenden Fungizide beträgt in einer empfohlenen Ausführungsform 0,2 bis 7 Gew.-%, bevorzugt 0,3 bis 5 Gew.-%. In einer besonders bevorzugten Ausführungsform wird der Mantel der Belüftungseinrichtung durch eine Bedampfung mit dem Fungizid beschichtet.

Der Erfindung liegt die Erkenntnis zu Grunde, dass die erfindungsgemäße Belüftungseinrichtung im Vergleich zu den aus dem Stand der Technik bekannten Belüftungsschläuchen den thermischen Anforderungen wesentlich besser genügt. Die erfindungsgemäße Belüftungseinrichtung zeichnet sich durch die miteinander vernetzten Polyurethaneinheiten im Gegensatz zu bisher bekannten Belüftungsschläuchen aus Polyurethan auch bei Temperaturen von beispielsweise 70° C durch eine hervorragende Festigkeit aus. Solche Temperaturen entstehen bei der Kompression der Luft im Inneren der Belüftungseinrichtung bzw. der Druckluftanlage. Auf Grund der Festigkeit bzw. Stabilität der Belüftungseinrichtung auch bei höheren Temperaturen wird gewährleistet, dass die Luftaustrittsöffnungen trotz der höheren Temperatur einen konstanten Öffnungsquerschnitt aufweisen und sich insbesondere nicht weiter öffnen. Auf diese Weise kann über den gesamten Betriebstemperaturbereich ein gleichmäßiger bzw. konstanter Lufteintrag in das Klärbecken gewährleistet werden, ohne dass eine aufwändige, temperaturabhängige Druckanpassung erforderlich ist. Die erfindungsgemäße Belüftungseinrichtung zeichnet sich durch eine optimale Dehnbarkeit und durch eine hohe mechanische Festigkeit aus. Darüber hinaus erweist sie sich als unerwartet hydrolysestabil, beständig gegenüber thermischem Abbau und gegenüber Chemikalien. Dies ermöglicht einen langfristigen problemlosen Einsatz, insbesondere auch in Industriekläranlagen. Auf Grund seiner optimalen Dehnbarkeit toleriert die erfindungsgemäße Belüftungseinrichtung auch Drucksprünge, die durch Betriebsstörungen der Druckluftaggregate hervorgerufen werden können oder gezielt zum Absprengen von Verkrustungen, die sich auf der Belüftungseinrichtung gebildet haben, erzeugt werden. Diese Vorgehensweise führt bei den aus der Praxis bekannten Schläuchen wegen des Aufreißens den Poren zu einer deutlichen Verkürzung der Lebensdauer. Neben der hohen Dehnbarkeit zeichnet sich die erfindungsgemäße Belüftungseinrichtung zusätzlich durch eine hohe Reißfestigkeit aus. Dadurch wird eine unerwünschte Vergrößerung der Luftaustrittsöffnungen vermieden, die ein Problem bei den aus dem Stand der Technik bekannten Belüftungsschläuchen darstellen. Dies meint, dass die Weiterreißfestigkeit der erfindungsgemäßen Belüftungseinrichtung gegenüber den aus dem Stand der Technik bekannten Schläuchen, insbesondere den EPDM- und Silikonschläuchen, deutlich verbessert ist. Der Erfindung liegt weiterhin die Erkenntnis zu Grunde, dass das erfindungsgemäße Material der Belüftungseinrichtung überraschend beständig gegenüber Mikrobenbewuchs ist. Ein unerwünschter Mikrobenbewuchs auf der Belüftungseinrichtung kann durch den zusätzlichen Einsatz eines Biozids erfolgreich vermieden werden. Das vorzugsweise verwendete Gleitmittel verhindert effektiv das für die aus dem Stand der Technik bekannten Polyurethanschläuche typische Anhaften und Aggregieren der Luftblasen auf der Oberfläche der Belüftungseinrichtung. Auch dadurch wird erreicht, dass ein dauerhafter effizienter Sauerstoffeintrag mit konstant kleinen Luftblasen in das Klärbecken möglich ist, Darüber hinaus reduziert das Gleitmittel ebenfalls das Anhaften von Verkrustungen auf der erfindungsgemäßen Belüftungseinrichtung, so dass ein langfristiger Betrieb mit einem im Vergleich zu den aus der Praxis bekannten Belilftungsschläuchen geringeren Druckverlust möglich ist. Gegenüber den aus der Praxis bekannten Belüftungsschläuchen bietet die erfindungsgemäße'BelOftungseinrichtung eine unerwartet hohe Lebensdauer und kann relativ kostengünstig hergestellt werden.

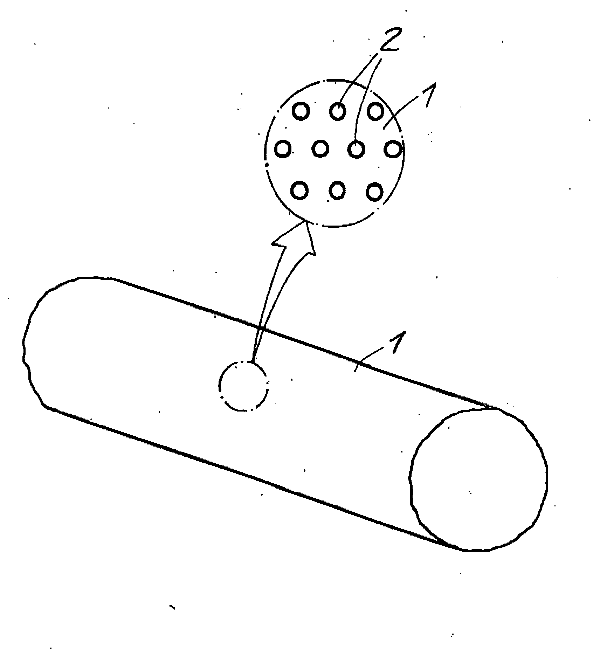

Nachfolgend wird die Erfindung anhand einer lediglich ein Ausführungsbeispiel darstellenden Zeichnung näher erläutert. Die einzige Figur zeigt in schematischer Darstellung eine perspektivische Ansicht eines erfindungsgemäßen Gegenstandes mit einer Ausschnittsvergrößerung.

Dargestellt ist eine erfindungsgemäße Belüftungseinrichtung in Form eines Schlauches, wobei es sich insbesondere um einen Schlauch zur Belüftung von Klärbecken handelt. Die Figur zeigt den Schlauch 1 in druckbeaufschlagtem Zustand. Auf Grund der druckbedingten Dehnung des Schlauches 1 sind die die Perforation bildenden Luftaustrittsöffnungen 2 geöffnet. Dies ist in der Ausschnittsvergrößerung erkennbar. In der hier dargestellten Ausführungsform sind Luftaustrittsöffnungen 2 in zumindest teilweise parallelen Reihen angeordnet, wobei die Abstände der Luftaustrittsöffnungen in den einzelnen Reihen konstant bzw. ungefähr konstant sind. Die im druckbeaufschlagten Zustand kreisförmigen Luftaustrittsöffnungen sind in dem nicht dargestellten druckfreien Zustand schlitzförmig ausgebildet.

## Patentansprüche

1. Belüftungseinrichtung zur Belüftung von Klärbecken und dergleichen, deren Wandung zumindest bereichsweise aus Polyurethan besteht,
wobei das Polyurethan polymere Ethereinheiten und/oder polymere Estereinheiten aufweist, die durch Urethangruppen miteinander verbunden sind,
wobei die Wandung aus Polyurethan zumindest bereichsweise eine Perforation in Form von Luftaustrittsöffnungen aufweist.

2. Belüftungseinrichtung nach Anspruch 1, wobei die Belüftungseinrichtung als Schlauch ausgebildet ist und wobei die Perforation sich über zumindest einen Teil der Länge des Schlauches und sich über zumindest einen Teil des Umfangs des Schlauches erstreckt.

3. Belüftungseinrichtung nach einem der Ansprüche 1 oder 2, wobei die Luftaustrittsöffnungen schlitzförmig und/oder kreisförmig und/oder I-förmig ausgebildet sind.

4. Belüftungseinrichtung nach einem der Ansprüche 1 bis 3, wobei die Belüftungseinrichtung aus dem Polyurethan bzw. die Wandung aus dem Polyurethan durch Extrusion hergestellt ist.

5. Belüftungseinrichtung nach einem der Ansprüche 1 bis 4, wobei die Belüftungseinrichtung durch bei der Extrusion zugesetztes Diphenylmethan-4,4'-diisocynat und/oder Toluylendiisocyanat als Diisocyanatkomponente hergestellt ist.

6. Belüftungseinrichtung nach Anspruch 5, wobei die Diisocyanatkomponente dem thermoplastischen Polyurethan zu 0,2 bis 10 Gew.-% zugegeben ist.

7. Belüftungseinrichtung nach einem der Ansprüche 1 bis 6, wobei zumindest ein Teil der Belüftungseinrichtung mit einem Gleitmittel behandelt ist.

8. Belüftungseinrichtung nach einem der Ansprüche 1 bis 7, wobei die Belüftungseinrichtung mit zumindest einem Biozid behandelt ist.

9. Belüftungseinrichtung nach Anspruch 8, wobei das Biozid zumindest eine Verbindung aus der Gruppe der Fungizide ist.

10. Belüftungseinrichtung nach Anspruch 8, wobei zumindest ein Fungizid Arsen und/oder Silber enthält.
